Europäisches Patentamt

European Patent Office (11) Publication number: **0 335 211**

Office européen des brevets **A2**

(12) **EUROPEAN PATENT APPLICATION**

(21) Application number: **89104893.6**

(51) Int. Cl.⁴: **G06K 15/02 , B41J 25/24**

(22) Date of filing: **18.03.89**

(30) Priority: **31.03.88 US 175553**

(43) Date of publication of application:
**04.10.89 Bulletin 89/40**

(84) Designated Contracting States:
**DE FR GB**

(71) Applicant: **International Business Machines Corporation**
**Old Orchard Road**
**Armonk, N.Y. 10504(US)**

(72) Inventor: **Kellam, Karen K.**
**208 N. Harris Street**
**China Grove, N.C. 28023(US)**
Inventor: **Kendrick, Barnes R., Jr.**
**6622 Brunning Glen Ct.**
**Charlotte, N.C. 28215(US)**
Inventor: **Laurer, Mark K.**
**1926 Winsted Ct.**
**Charlotte, N.C. 28213(US)**
Inventor: **Mitchell, Gary A.**
**220 E. Eagle**
**Versailles Kentucky(US)**
Inventor: **Tong, Ronnie C.**
**3038 Silver Birch Dr.**
**Charlotte N.C.28213(US)**

(74) Representative: **Blutke, Klaus, Dipl.-Ing.**
**IBM Deutschland GmbH Intellectual Property**
**Dept. Schönaicher Strasse 220**
**D-7030 Böblingen(DE)**

(54) **Printer with enhanced multiple font capability.**

(57) In a printer capable of printing either resident (30) or user selectable (34) fonts, the effective amount of font information that can be added to the printer is increased by eliminating the need for storing duplicate character information. A method and apparatus is described whereby for each user selectable font (36, 38, 40) a character address table (24) and character data are stored in a portion of the printer memory. The character address table (24) contains resident font addresses for duplicate characters and different addresses for user selectable font characters.

*Fig. 1*

## PRINTER WITH ENHANCED MULTIPLE FONT CAPABILITY

This invention relates to printers that employ multiple fonts and in particular printers that have the capability of using fonts provided by the user in addition to those fonts provided as a permanent feature of the device.

With the increasing popularity of high resolution printers, also known as letter quality printers, such as 24-wire, resistive ribbon, ink jet and electrophotographic printers, users have come to demand wider ranges of type fonts for use in such applications as desk top publishing. Now that the output of the printer is of a much higher quality there is a demand by users for greater variety in the number of type fonts that are available to them. Not only do users want more fonts but they also want to design their own fonts or to purchase fonts from others. As the number of print elements rises and the resolution of the printer increases, the amount of storage required to store the data necessary for generating characters has risen exponentially.

Although the cost of memory per byte is decreasing, it nevertheless remains a significant factor. As an example, a 24-wire printer with a 24 x 24 character cell size increases the memory requirements by approximately 600% as compared to the popular 9 wire printers having a 9 x 12 character cell size. This increase is then multiplied by the number of characters in the font and the number of fonts the printer can store.

To accommodate the large character generator storage requirements, additional storage has to be added to the printer or a data compression algorithm has to be employed. Various compression algorithms are known, for example United States Patent Nos. 4,467,363 or 4,353,653, IBM Technical Disclosure Bulletin of December 1983, page 3906, and application Serial No. 033,296 all describe compression algorithms that can be used to reduce the amount of memory required to store character generator data. While such algorithms are very useful in reducing storage requirements they accomplish that result at a cost of increased processing and a consequent reduction in printer throughput.

A technique known for reducing the storage requirements in a multiple language, terminal display system is described in United States Patent No. 4,429,306 to Macauley et al. for Addressing System for a Multiple Language Character Generator. That patent teaches that there are symbols common to two or more languages and that they need not be stored as part of the symbol set of both languages. The patent goes on to describe a method and apparatus for selecting that portion of the memory containing the special symbols of the particular language. The proper special symbol area of the character generator memory is selected by comparing the high order bits of a character code with resident compare bits to determine whether a different special symbol area of the character generator memory is to be substituted for the default area contiguous with the common area. If the compare bits indicate that a different special area of the character generator is to be substituted, the high order bits of the display character code are not directly used to address the character generator memory but are replaced by resident substitution bits to access that special symbol area unique to the language being displayed.

It is an object of this invention to provide a technique that can either be used separately or in combination with one of the various data compression algorithms and therefore is independent of any particular algorithms. Similar to the Macauley et al. patent, this invention eliminates the need for storing duplicate characters, however, this invention avoids the need, required by Macauley et al., for engaging in steps of comparing and substituting data. Those steps require extra processing time that can adversely affect printer throughput.

This object of the invention is accomplished by the features of the main claims. Further advantages of the invention are characterized in the subclaim.

The invention is employed in a printer responsive to a data stream comprised of character codes representing characters for producing indicia on a record medium. The printer has first memory means for storing variable font data and second memory means for storing permanent font data. Table means are furnished having an input portion and an output portion for relating each of said character codes to said font data stored in said first and second memory means. A decoder means, responsive to said output portion of said table means, is provided for selecting either of said memory means. Logic means, associated with said table means and said first and second memory means is responsive to the character codes. The logic means selects the corresponding input portion of the table means and transmits the corresponding output portion to the decoder which then selects the appropriate memory means. Accordingly, the appropriate font data is selected using a table look-up decoder and logic with the resultant increase in speed and throughput over prior art comparison and substitution techniques.

Referring now to the drawings, wherein like reference numerals are used to designate like parts, a

EP 0 335 211 A2

preferred embodiment of the invention is described.

Figure 1 is an overall block diagram of an apparatus for practicing the invention.

Figures 2a, 2b, and 2c show the various table constructions for use in practicing the invention.

Figure 3 describes a decoder means useful in practicing the invention.

Figure 4 is a flow chart describing the method steps for practicing the invention.

Figures 5a and 5b describes two different environments for carrying out the invention.

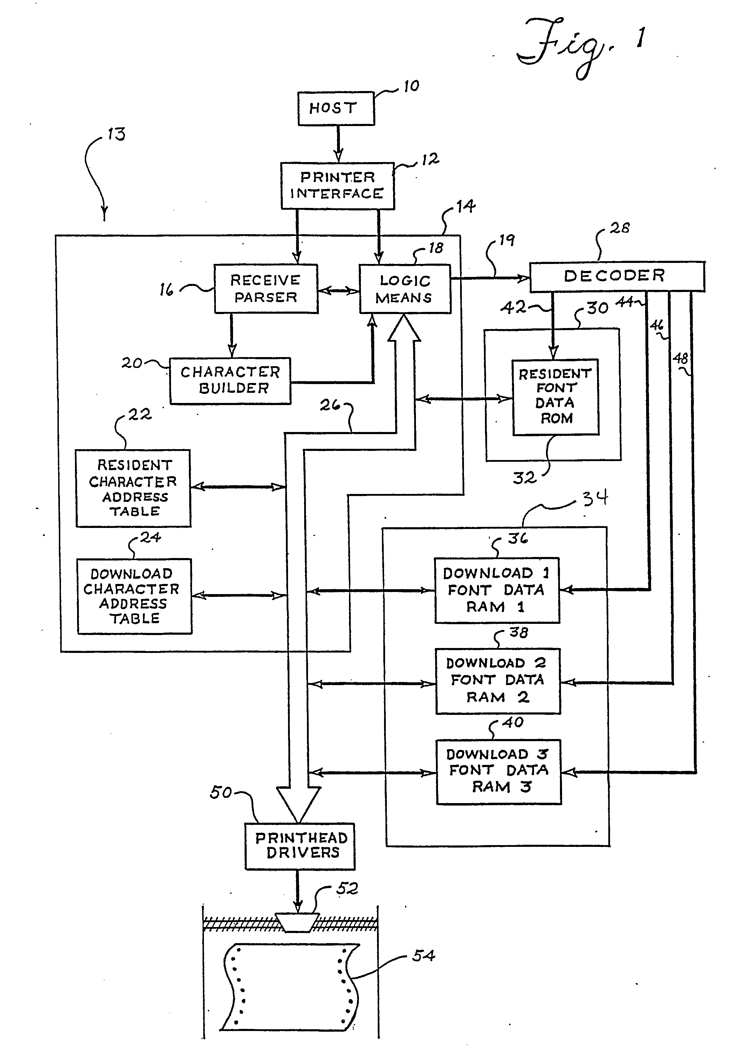

Referring to Figure 1, an information handling system for practicing the invention is comprised of a host 10, such as any of the various personal computers available from IBM (Personal Computer AT or PS/2), connected to a printer 13 through printer interface 12. An example of a printer useful in practicing this invention would be the IBM 4201. The interface for that printer is the IBM parallel printer interface (Centronics type).

Printer 13 is comprised of microprocessor 14, such as the Intel 8031 executing a stored program, both standard RAM memory 34 and ROM memory 30, decoder 28 for selecting from among the various memory modules of memories 30 and 34, and printhead drivers 50 for activating the individual print elements of printhead 52 so that indicia (not shown) are recorded on record medium 54.

The process for making printers is well known to those skilled in the art, an example (IBM 4201) has been mentioned, therefore this invention will be described in terms of the modifications necessary to such a printer for carrying out this invention.

Referring again to Figure 1, host 10 operating under an application program such as word processing software will generate data for transmission to printer 13 over interface 12. The resulting data stream is processed by the printer to generate indicia or printed characters on record medium 54. The data stream is received by logic means 18 of printer 13 wherein the necessary error checking is performed. Control data or information generated by host 10 is transmitted directly to logic means 18. Logic means 18 interprets the host control information and when appropriate, activates receive parser 16. Receive parser 16 extracts print control and character data from the data stream. The print control information is passed to the logic means 18 for controlling such printer functions as paper handling. The character data comprised of the character codes is passed to character builder 20. The character codes generated by host 10 are predetermined such as the standard ASCII or EBCIDIC codes well known to those skilled in the art.

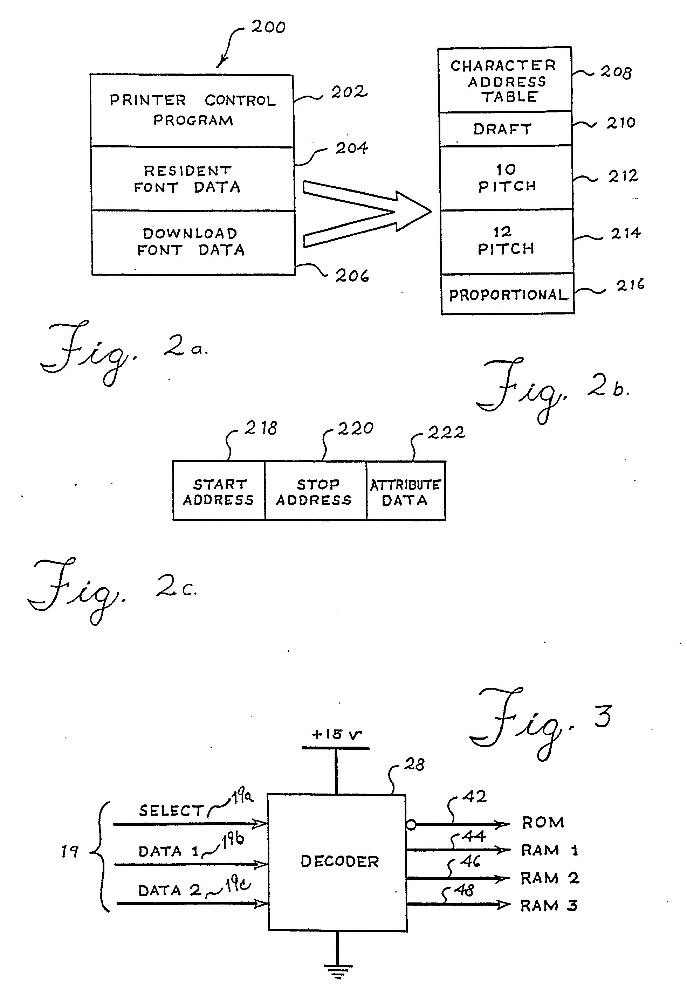

For each character code extracted from the data stream, logic means 18 calculates the address in the character table where the data for producing that character is stored. If the printer 13 is operating in download mode, then the calculated address is in the download character address table 24. If printer 13 is operating in default mode, then the calculated address is in resident character address table 22. Once the address is determined, logic means 18 loads the data at the calculated address. Referring now to Figure 2c, the registers at the character address contain start address 218, stop address 220 and attribute data 222. The attribute data contained in attribute data register 222 determines whether the character data will be found as part of the resident font or the download font; and, if the download font is selected, the attribute data will also determine which of RAM's 36, 38, or 40 of download memory 34 is to be activated.

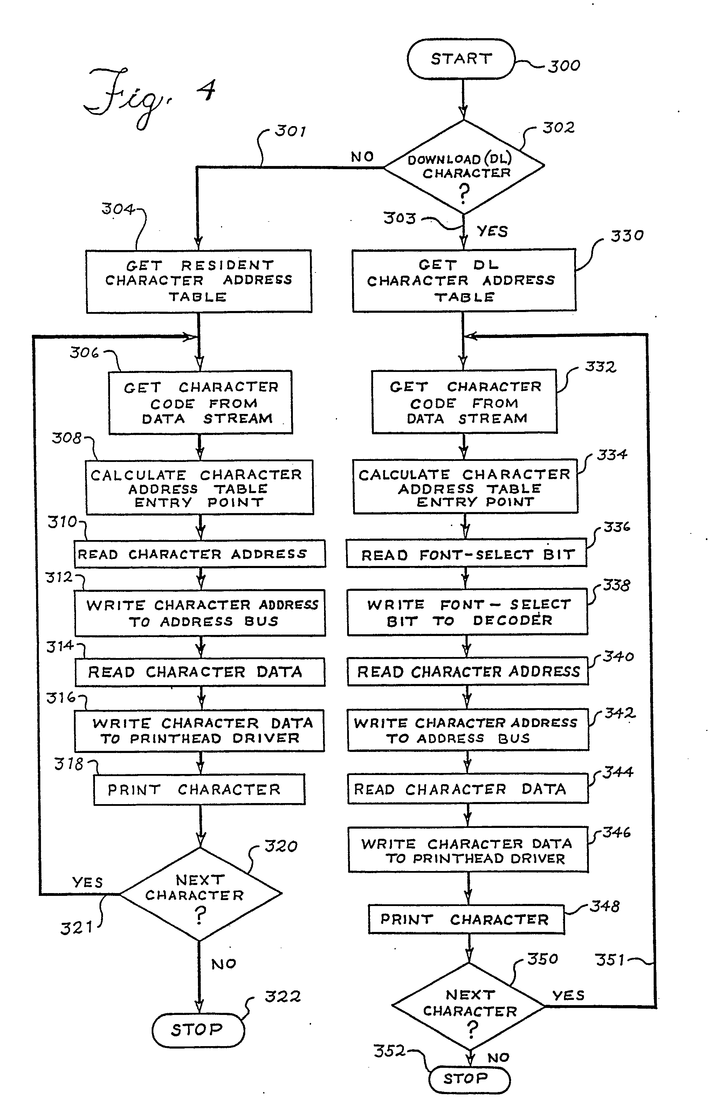

Logic means 18 first passes the attribute data of attribute data register 222 to decoder 28 then, using the start address in start address register 218, accesses the character data in either of memories 30 or 34. In the preferred embodiment, shown in Figure 3, decoder 28 is a hardware component such as a 2-to-4 decoder/demultiplexer which has a delay time that is less than the access time of either of resident memory 30 or download memory 34. If for example, the character data is contained in memory 36 then the start address will be the address of memory 36 containing the first part of the character data and the stop address of stop address register 220 will contain the last part of the character data. The data will pass, on data bus 26, from memory 36 to printhead drivers 50 for driving printhead 52. Printhead 52 can be any of the matrix printheads such as wire, ink jet (including conventional continuous flow or drop on demand such as a thermally activated bubble jet) or resistive ribbon wherein each bit of the character data determines whether a print element, such as a wire, nozzle or electrode is activated. By the selective activation of the individual print elements, as printhead 52 scans across record medium 54, indicia or printed characters are constructed.

Referring now to Figure 2a the memory map 200 for printer 13 has a printer control portion 202 containing the program executed by microprocessor 14 for controlling the overall printer operation. Memory map 200 also has a resident font data portion 204 and a download font data portion 206. Resident font data portion 204 contains the resident or default font and is in a preferred embodiment a read only memory shipped with the printer.

Within each of memory portions 204 and 206 the data is organized according to the table described in Figure 2b. For each font there is a specific character address table 208 and the individual character data

3

portions 210 for the draft font, 212 for 10 pitch, 214 for 12 pitch and proportional font 216.

The data contained in character address table 208 is organized according to Figure 2c. For each character to be printed there is a start address 218, giving the beginning location of the character data, a stop address 220, giving the ending location of the character data, and the attribute data 222 which identifies whether the character data is in either the resident or download font memory.

Referring to Figure 3 a decoder for use in this invention is described. Three lines from logic means 18, shown as lead line 19 in Figure 1, are the inputs to decoder 28. Select line 19a enables the decoder while lines 19b and 19c provide the input data to the decoder for activating the selected memory module. It should be noted that when decoder 28 is deselected the outputs are normally low, however, the output on line 40 is electronically inverted thus enabling resident font data ROM 30. Depending upon which module contains the current character data, logic means 18 transmits the appropriate codes on lines 19b and 19c as Data 1 and Data 2. In one embodiment, decoder 28 applies the logic scheme outlined in Table A below. In this embodiment, a 2-to-4 decoder/demultiplexer such as a TTL 74LS139 available from Texas Instruments, Inc.

TABLE A

| Enable | Data 1 | Data 2 | ROM | RAM | RAM 2 | RAM 3 |
|---|---|---|---|---|---|---|
| 0 | 0 | 0 | 0 | 1 | 1 | 1 |
| 0 | 0 | 1 | 1 | 0 | 1 | 1 |
| 0 | 1 | 0 | 1 | 1 | 0 | 1 |
| 0 | 1 | 1 | 1 | 1 | 1 | 0 |
| 1 | X | X | 1 | 1 | 1 | 1 |

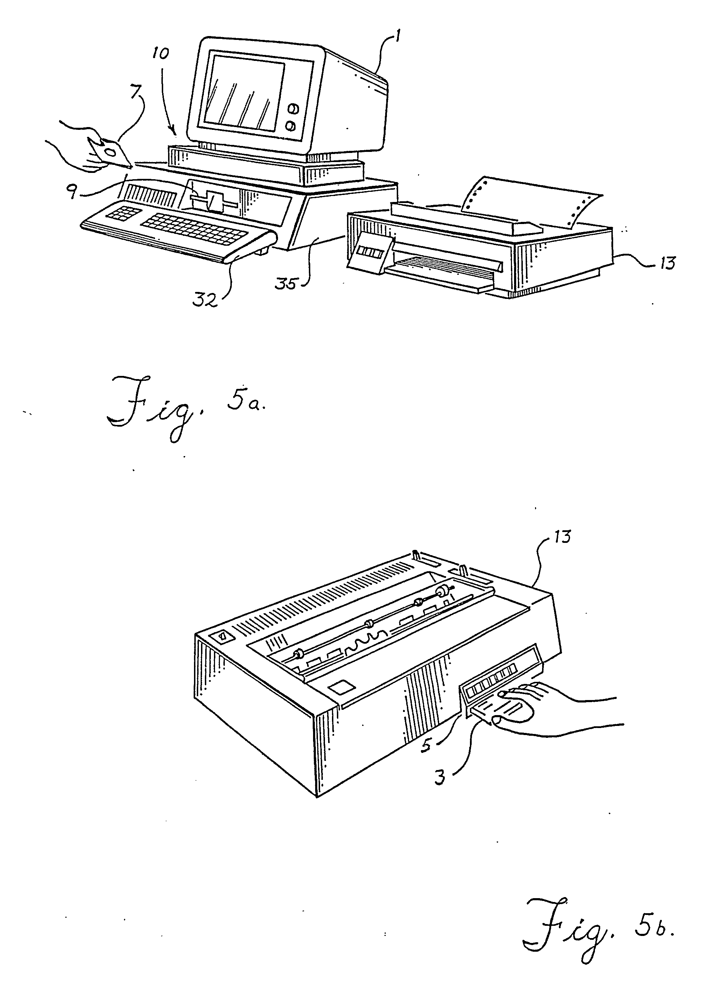

Referring now to Figure 4, a method for practicing the invention will be described in flow diagram form.

After initialization, represented by start step 300, it is determined whether the printer is operating in download or default mode, represented here by decision step 302. If the printer is not operating in download mode the method follows path 301 to step 304 where the character address table for the resident font is obtained. In step 306 a character code is extracted from the data stream. In the next step, step 308, the entry point into the resident font character address table is calculated. Then, in step 310, the character address contained in the calculated address of the character address table is read. In step 312, that character address is written to an address bus and the character data contained in that address is read in step 314.

In step 316 the character data is written to a printhead driver and in step 318 the character is printed. Step 320 determines whether another character is to be printed. If yes, the method flows along path 321 to step 306 whereby the next character code is extracted from the data stream. If there are no other characters to be printed the method stops, as indicated by step 320.

If operating in download mode, as determined in step 302, the method follows path 303. In step 330, the download character address table is obtained. In the next step, step 332, a character code is extracted from the data stream. Step 334 calculates the entry point into the download character address table. In step 336 the font-select bit, which in actual practice may comprise a plurality of bits, is read from the calculated address of the character address table and written to the decoder, step 338, which enables or activates the selected font memory. Then in step 340, the character address contained in the calculated address of the character address table is read. In step 342, that character address is written to an address bus and the character data contained in that address is read in step 344. In step 346 the character data is written to a printhead driver and in step 348 the character is printed. Step 350 determines whether another character is to be printed. If yes, the method flows along path 351 to step 332 whereby the next character code is extracted from the data stream. If there are no other characters to be printed the method stops, as indicated by step 352.

The method, having been described in flow diagram form, will thus enable those skilled in the art to practice the invention by applying the described method in whichever programming language would be appropriate. In the preferred embodiment the method will be practiced by a microprocessor operating on a stored program.

Two environments for practicing the invention are illustrated in Figures 5a and 5b. In Figure 5a a host 10 is an IBM XT, shown at 35, having a keyboard 32, a display 1, a disk drive 9 and a printer 13, such as an IBM 4201 Proprinter (TM). The download font data is contained on a diskette 7 and transmitted to printer 13 by host 35. Printer 13 receives the download font data, consisting of a character address table and character data, and loads that data in the download font data portion of its random access memory. In Figure 5b printer 13 is shown with a font cartridge 3 and receptacle 5. In the embodiment depicted by Figure 5b, the user supplied font data is contained in a read only memory of cartridge or housing 3. Such a cartridge/receptacle combination useful in practicing this invention is fully described in United States Patent No. 4,388,010 for Font Module For Matrix Printer, the disclosure of which is hereby incorporated herein by reference.

From the foregoing description it will be understood by those having skill in the art that according to the present invention, fonts may be stored in a printer with reduced storage and processing requirements compared to prior art techniques.

While the invention has been particularly shown and described with reference to a preferred embodiment, it will be understood by those skilled in the art that various other changes in form and detail may be made without departing from the spirit and scope of the invention.

## Claims

1. Printer (13) responsive to a data stream comprised of character codes representing characters for producing indicia on a record medium, the improvement comprising:
first memory means (34) for storing variable font data;
second memory means (30) for storing permanent font data;
table means (24, 22) having an input portion and an output portion for relating each of said character codes to said font data stored in said first and second memory means;
decoder means (28) responsive to said output portion of said table means for selecting either of said memory means; and
means responsive to said character codes for electing said input portion and for transmitting said output portion to said decoder.

2. Printer responsive to a plurality of character codes and having a printing element for producing indicia on a record medium, said printer comprising:
first memory means (34) for storing a first set of font data;
second memory means (30) for storing a second set of font data;
a table means (22, 24) having an entry address for each of said character codes, an attribute bit for selecting one of said first and second memories and a character address for identifying the location where font data for said character is stored; and
decoder means (28) responsive to said attribute bit for selecting either of said memory means;
mechanism controller responsive to said font data for driving said printing element;
a processor (14) responsive to said character codes, for selecting the entry address of said table for said character code, transmitting said attribute bit to said decoder, reading said font data from said selected memory, and thereafter writing said font data to said mechanism controller.

3. Information handling system comprising:
a host processor (10) for generating and transmitting character codes;
a printer (13) having a printing element for producing characters on a record medium, a first memory means (34) for storing a first set of font data, a second memory means (30) for storing a second set of font data, a mechanism controller responsive to said font data for driving said printing element, a processor means (14) responsive to said character codes for selecting one of said memories and for transmitting said font data of said selected memory to said mechanism controller; and
a table means (22, 24) having an entry address for each of said character codes, an attribute bit for selecting one of said first and second memories and a character address for identifying the location where font data for said character is stored; and
an interface means (12) for connecting said host and said printer.

4. Method for printing in a printer responsive to a data stream comprised of character codes representing characters for producing indicia on a record medium, characterized by the following steps:
extracting a character code from said data stream;
locating an entry point for said character code in a table;
selecting a font identifying bit, associated with said character code, from said located entry point;
transmitting said bit to a decoder;
selecting one of two memories in response to said bit transmitted to said decoder;

selecting an address associated with said character code from said table;

transmitting data from said selected address of said selected memory to a mechanism controller; and

printing said character on said record medium based on the transmitted data.

5. Printer of Claim 1 wherein said first memory means is a pluggable cartridge.

6. Printer of Claim 1 wherein said logic means is a program controlled microprocessor.

7. Printer of Claim 1 wherein said first memory means (34) is a random access memory and said second memory means is a read only memory.

8. Information handling system of Claim 3 wherein said first set of font data (34) is transmitted from said host to said printer.

9. Information handling system of Claim 8 wherein the table for the first memory means (34) is transmitted from said host to said printer.

10. Printer of Claim 1 wherein said decoder (28) is a 2-to-4 decoder/demultiplexer.

11. Printer of one of the claims 1 - 3 wherein said printing element is a serial wire matrix printhead or a resistive ribbon thermal transfer printhead or an ink jet printhead.

12. The printer of Claim 13 wherein the ink jet printhead produces ink droplets by employing thermally activated bubbles.

13. The printer of Claim 5 wherein said pluggable memory means is an electronic memory contained in a housing for being removable insertion in said printer and for storing character information for use by said printer to print characters.

14. Printer of one of the claims 1 - 3 wherein said table is contained in said pluggable memory.

*Fig. 1*

*Fig. 2a.*

*Fig. 2b.*

*Fig. 2c.*

*Fig. 3*

*Fig. 4*

START ~ 300

301

DOWNLOAD (DL) CHARACTER ? ~ 302

NO

303 ~

YES

304 ~
GET RESIDENT CHARACTER ADDRESS TABLE

330 ~
GET DL CHARACTER ADDRESS TABLE

306 ~
GET CHARACTER CODE FROM DATA STREAM

332 ~
GET CHARACTER CODE FROM DATA STREAM

308 ~
CALCULATE CHARACTER ADDRESS TABLE ENTRY POINT

334 ~
CALCULATE CHARACTER ADDRESS TABLE ENTRY POINT

310 ~
READ CHARACTER ADDRESS

336 ~
READ FONT-SELECT BIT

312 ~
WRITE CHARACTER ADDRESS TO ADDRESS BUS

338 ~
WRITE FONT - SELECT BIT TO DECODER

314 ~
READ CHARACTER DATA

340 ~
READ CHARACTER ADDRESS

316 ~
WRITE CHARACTER DATA TO PRINTHEAD DRIVER

342 ~
WRITE CHARACTER ADDRESS TO ADDRESS BUS

318 ~
PRINT CHARACTER

344 ~
READ CHARACTER DATA

346 ~
WRITE CHARACTER DATA TO PRINTHEAD DRIVER

320 ~
NEXT CHARACTER ?

YES

321 ~

348 ~
PRINT CHARACTER

NO

322 ~
STOP

350 ~
NEXT CHARACTER ?

351 ~

YES

352 ~

NO

STOP

Fig. 5a.

Fig. 5b.